# EUROPÄISCHE PATENTSCHRIFT

(11) **EP 4 101 627 B1**
(45) Veröffentlichungstag und Bekanntmachung des Hinweises auf die Patenterteilung: **27.03.2024**
(21) Anmeldenummer: 21213360.7
(22) Anmeldetag: 09.12.2021
(51) Int. Cl.: B29D 30/30, B29D 30/46

(54) **KLEMMVORRICHTUNG FÜR EINE REIFENBAUMASCHINE SOWIE VERFAHREN ZUM EINKLEMMEN EINES REIFENBAUTEILS**
CLAMPING DEVICE FOR A TYRE BUILDING MACHINE AND METHOD FOR CLAMPING A TYRE COMPONENT
DISPOSITIF DE SERRAGE POUR UNE MACHINE À CONFECTIONNER LES PNEUS, AINSI QUE PROCÉDÉ DE SERRAGE D'UN COMPOSANT DE PNEU

(30) Priorität: 07.06.2021 DE 102021205710
(43) Veröffentlichungstag der Anmeldung: 14.12.2022
(73) Patentinhaber: Continental Reifen Deutschland GmbH, 30175 Hannover (DE)
(72) Erfinder: Greupner, Bernd, 30165 Hannover (DE); Vartholomos, Adionios, 30165 Hannover (DE); Kwee, Renate, 30165 Hannover (DE); Havekost, Yannic, 30165 Hannover (DE); Dietrich, Wolfgang, 30165 Hannover (DE)
(74) Vertreter: Continental Corporation

(56) Entgegenhaltungen:
- DE-A1-102012 101 766
- DE-A1-102017 220 465
- DE-A1-102018 215 647

## Beschreibung

Die Erfindung betrifft eine Klemmvorrichtung für eine Reifenbaumaschine gemäß dem Oberbegriff des Anspruches 1, sowie ein Verfahren zum Einklemmen eines Reifenbauteils.

Im Reifenaufbauprozess mit einer Reifenbaumaschine werden Reifenbauteile vor dem Aufspulen auf einer Reifenaufbautrommel auf die entsprechende Länge geschnitten. Dazu wird das jeweilige Reifenbauteil im Schnittbereich auf eine Schneidleiste aufgelegt und ein Klemmelement, das aus ein oder mehreren Elementen bestehen kann, von oben durch einen Aktuator auf das jeweiligen Reifenbauteil gedrückt, so dass das Reifenbauteil zwischen der Schneidleiste und dem Klemmelement eingeklemmt wird. Dabei können beispielsweise fingerartige Klemmelemente vorgesehen sein, denen jeweils ein pneumatischer Aktuator zugeordnet ist, der diese auf das Reifenbauteil aufdrückt. Mit einer derartigen Klemmvorrichtung kann das Reifenbauteil für den nachfolgenden Schnittprozess fixiert werden.

Nachteilig dabei ist, dass die Konstruktion zum Verstellen der Klemmelemente sehr aufwändig ist. Zudem können die Klemmelemente bei stark profilierten Reifenbauteilen nicht gleichmäßig über die gesamte Breite auf das Reifenbauteil gedrückt werden. Weiterhin können sich die Klemmelemente auch gegenseitig verschieben. Daher kann eine gleichmäßige Klemmkraft auf das jeweilige Reifenbauteil über die gesamte Klemmbreite nicht sichergestellt werden. Dies hat gegenwärtig einen negativen Einfluss auf die Zykluszeit, da eine manuelle Nachkorrektur nötig ist. Ohne eine solche Korrektur kann es zu einer Minderung der Qualität des Laufstreifenspleißes kommen. Die Patentschrift DE 10 2018 215647 A1 offenbart eine Klemmvorrichtung mit ähnlichen Merkmalen wie der Oberbegriff des unabhängigen Anspruchs 1.

Vor diesem Hintergrund liegt der folgenden Erfindung die Aufgabe zugrunde, eine Klemmvorrichtung und ein Verfahren zum Einklemmen eines Reifenbauteils bereitzustellen, die eine sichere und gleichmäßige Fixierung des Reifenbauteils ermöglichen.

Diese Aufgabe wird durch eine Klemmvorrichtung nach Anspruch 1 gelöst. Die Unteransprüche geben bevorzugte Weiterbildungen an.

Die Erfindung geht demnach von einer Klemmvorrichtung für eine Reifenaufbauanlage zur Herstellung eines Fahrzeugreifens bestehend aus mehreren Reifenbauteilen aus, die mindestens aufweist:
- eine Schneidleiste zum Auflegen eines Reifenbauteils;
- ein Klemmelement, wobei das Klemmelement durch einen Aktuator, beispielsweise einen Motor, insbesondere einen Servomotor, in eine erste Richtung auf die Schneidleiste zu bewegt werden kann zum Einklemmen eines auf die Schneidleiste aufgelegten Reifenbauteils zwischen dem Klemmelement und der Schneidleiste.

Erfindungsgemäß ist dabei vorgesehen, dass
- das Klemmelement mehrere parallel zueinander angeordnete Klemmsegmente aufweist, die in benachbart zueinander angeordneten Führungselementen aufgenommen sind, wobei die Klemmsegmente
- in einer gelösten Stellung geführt von den jeweiligen Führungselementen einzeln und unabhängig von den anderen Klemmsegmenten in oder entgegen der ersten Richtung, d.h. auf die Schneidleiste bzw. auf das Reifenbauteil zu oder von diesem weg, beweglich sind, und
- in einer fixierten Stellung derartig in den Führungselementen fixiert werden können, dass sie bei einer Verstellung des jeweiligen Führungselementes in die erste Richtung mit einer Vorderseite auf die Schneidleiste zu bewegt werden zum Einklemmen eines auf die Schneidleiste aufgelegten Reifenbauteils zwischen der Vorderseite und der Schneidleiste, sobald die Vorderseiten mit einer definierten Kraft auf die Oberfläche des Reifenbauteils aufdrücken.

Auf diese Weise kann selbst bei stark profilierten Reifenbauteilen, beispielsweise auch bei hohen Schulterprofilen, eine gleichmäßige Klemmkraft auf der gesamten Klemmbreite erreicht werden, da sich das segmentierte Klemmelement in der gelösten Stellung an die jeweilige Profilkontur anpassen kann, indem die einzelnen Klemmsegmente geführt von den Führungselementen in die entsprechende Stellung gebracht werden, in der sie die Profilkontur möglichst genau abbilden. Anschließend kann das so eingestellte, segmentierte Klemmelement in der fixierten Stellung an das Reifenbauteil angenähert werden. Weiterhin können neben stark profilierten Reifenbauteilen auch flache, ebene Reifenbauteile eingeklemmt werden, so dass sich insgesamt ein flexibler Einsatz ergibt.

Die Annäherung des Klemmelementes mit den fixierten Klemmsegmenten kann dabei über lediglich einen Aktuator, beispielsweise einen Motor, insbesondere einen Servomotor, erfolgen, der auf alle fixierten Klemmsegmente gemeinsam einwirkt und diese dadurch an die Schneidleiste bzw. das darauf aufliegende Reifenbauteil annähert bzw. mit einer definierten Andruckkraft aufdrückt. Dadurch kann gegenüber dem Stand der Technik das Vorsehen von mehreren Aktuatoren, insbesondere pneumatischen Zylindern, entfallen.

Durch das verbesserte Einklemmen über die gesamte Klemmbreite ist zudem eine Verbesserung der nachfolgende Schnittkante und damit des Laufstreifenspleißes gewährleistet, ohne dass eine Nachkorrektur nötig ist, was auch die Zykluszeit minimiert.

Vorzugsweise ist weiterhin vorgesehen, dass die Führungselemente jeweils eine obere und eine untere Führungsleiste aufweisen, wobei die Klemmsegmente zwischen den Führungsleisten längsverschieblich geführt sind. Dadurch kann in einfacher Weise eine geführte Einstellung der einzelnen Klemmsegmente erreicht werden, wobei gemäß einer weiteren Ausbildung vorgesehen ist, dass zwischen der oberen und der unteren Führungsleiste mindestens ein Trennsteg verläuft, wobei dann in einem Führungselement mindestens zwei Klemmsegmente längsverschieblich aufgenommen sind und die mindestens zwei Klemmsegmente durch den mindestens einen Trennsteg voneinander separiert sind. Auf diese Weise können einem Führungselement zwei oder mehr Klemmsegmente zugeordnet werden, wobei aufgrund des mindestens einen Trennstegs für die mehreren Klemmsegmente auch weiterhin eine unabhängige Bewegung gewährleistet werden kann.

Durch den Aufbau aus verschiedenen Führungselementen, in denen die Klemmsegmente geführt sind, ist auch eine Reparatur vereinfacht, da bei Defekten in einzelnen Klemmsegmenten bzw. Führungselementen nicht das gesamte Klemmelement der Klemmvorrichtung auszutauschen ist, sondern lediglich einzelne Bauteile, insbesondere ein einzelnes bzw. die betroffenen Führungselemente.

Vorzugsweise ist ferner eine Fixieranordnung mit mehreren beweglichen Keilen vorgesehen, um die fixierte Stellung einstellen zu können, wobei die Keile derartig auf die jeweiligen Klemmsegmente aufgedrückt werden können, beispielsweise über einen Servomotor, dass das jeweilige Klemmsegment zwischen dem Keil und dem Führungselement, in dem das betreffende Klemmsegment geführt ist, fixiert werden kann. Die Keile können dabei grundsätzlich von jeder Seite klemmend auf das jeweiligen Klemmsegment einwirken, wobei vorzugsweise vorgesehen ist, dass die beweglichen Keile oberhalb einer Oberseite der einzelnen Klemmsegmente angeordnet sind, wobei die Keile derartig auf die Oberseite der jeweiligen Klemmsegmente aufgedrückt werden können, dass das jeweilige Klemmsegment zwischen dem Keil und dem Führungselement, in dem das betreffende Klemmsegment geführt ist, fixiert wird zum Einstellen der fixierten Stellung. Demnach kann in einfacher Weise eine kraftschlüssige bzw. reibschlüssige Verbindung ausgebildet werden, um nach einer Einstellung der Klemmsegmente in Abhängigkeit der Profilkontur ein nachfolgendes Andrücken dieser an die Oberfläche des Reifenbauteils zu ermöglichen.

Dabei ist vorzugsweise vorgesehen, dass ein Keil auf mindestens zwei Klemmsegmente desselben und/oder benachbarter Führungselemente einwirken kann. Dadurch kann bei besonderes feiner Unterteilung der Klemmsegmente die Anzahl an Keilen minimiert werden, die demnach nicht zwangsläufig in genau derselben Unterteilung wie die Klemmsegmente vorzuliegen haben bzw. nicht für jedes Klemmsegment ein eigener Keil nötig ist, da diese nur für das Andrücken sorgen sollen.

Vorzugsweise ist weiterhin vorgesehen, dass die Oberseite der Klemmsegmente nach außen hin bzw. zur äußeren Oberfläche des Führungselementes hin abgeschrägt sind und die Keile entsprechend komplementär abgeschrägt sind. Dadurch kann eine Andruckfläche maximiert werden, so dass sich eine verbesserte bzw. sichere Klemmung in der fixierten Stellung ergibt. Die Klemmsegmente werden also beim Aufdrücken auf die Oberfläche des Reifenbauteils sicher an einem Verrutschen im jeweils zugeordneten Führungselement gehindert.

Vorzugsweise ist weiterhin vorgesehen, dass zwischen den Keilen und einem die Keile auf die Klemmsegmente aufdrückenden Steg ein elastisches Zwischenstück angeordnet ist und/oder die Keile aus einem elastischen Material gefertigt sind. Dadurch können Höhentoleranzen der Klemmsegmente ausgeglichen werden, wobei durch das elastische Zwischenstück bzw. die elastischen Keile, das bzw. die beispielsweise aus Hartgummi bestehen kann/können, die Kraft gleichmäßig über die gesamte Schnittbreite in die Keile eingeleitet wird.

Vorzugsweise ist weiterhin vorgesehen, dass eine äußere Oberfläche der Klemmsegmente nicht mit einer äußeren Oberfläche des jeweiligen Führungselementes abschließt oder darüber hinausragt und/oder die Klemmsegmente gegenüber der äußeren Oberfläche des jeweiligen Führungselementes, in dem sie aufgenommen sind, nach innen eingerückt sind, wobei benachbarte Führungselemente des Klemmelementes mit ihren äußeren Oberflächen aneinander liegen, vorzugsweise bündig aneinander liegen. Um die Klemmung über die Klemmbreite zu erreichen, sind also mehrere Führungselemente mit den jeweils geführten Klemmsegmenten aneinandergereiht, wobei die Klemmsegmente zum Verhindern einer Beeinflussung der Bewegung käfigartig in dem jeweiligen Führungselement geführt bzw. eingeschlossen sind, so dass sich benachbarte Klemmsegmente nicht berühren.

Vorzugsweise ist weiterhin vorgesehen, dass die Klemmsegmente einen ersten Vorsprung aufweisen, der in einer Vorposition an einer Stirnseite des jeweiligen Führungselementes derartig anliegt, dass eine weitere Verschiebung der Klemmsegmente in die erste Richtung innerhalb des Führungselementes verhindert ist und/oder die Klemmsegmente einen zweiten Vorsprung aufweisen, auf den in der gelösten Stellung ein Rückstellelement derartig einwirken kann, dass sich die Klemmsegmente entgegen der ersten Richtung innerhalb der Führungselement verschieben. Daher kann in einfacher Weise eine Arretierung bzw. Bewegungseinschränkung der Klemmsegmente in gewissen Positionen erfolgen, die vom Klemmprozess vorgegeben werden können.

Erfindungsgemäß ist demnach auch ein Verfahren zum Einklemmen eines Reifenbauteils zwischen einem Klemmelement und einer Schneidleiste vorgesehen, insbesondere mit der beschriebenen erfindungsgemäßen Klemmvorrichtung, wobei diese Klemmung im Rahmen der Herstellung eines Fahrzeugreifens stattfindet. Dabei sind mindestens die folgenden Schritte vorgesehen:
- Auflegen des Reifenbauteils auf die Schneidleiste in der entsprechenden Ausrichtung;
- einzelnes Bewegen der parallel zueinander angeordneten Klemmsegmente, die in den Führungselementen geführt sind, derartig, dass sich eine Profilkontur einer Oberfläche des aufgelegten Reifenbauteils auf Vorderseiten der parallel zueinander angeordneten Klemmsegmente überträgt und/oder darauf abgebildet wird;
- anschließendes Fixieren der Klemmsegmente mit dieser übertragenen Profilkontur in den Führungselementen;
- gemeinsames Annähern der fixierten Klemmsegmente an die Schneidleiste um das auf die Schneidleiste aufgelegte Reifenbauteil zwischen den Vorderseiten der Klemmsegmente und der Schneidleiste einzuklemmen.

Vorzugsweise ist dabei vorgesehen, dass das einzelne Bewegen der parallel zueinander angeordneten Klemmsegmente dadurch erfolgt, dass alle Klemmsegmente gemeinsam in einer gelösten Stellung, in der sie geführt von den jeweiligen Führungselementen einzeln und unabhängig von den anderen Klemmsegmenten in oder entgegen der ersten Richtung beweglich sind, mit der Oberfläche des auf die Schneidleiste aufgelegten Reifenbauteils in Berührung gebracht werden, wobei die Klemmsegmente bei einer Berührung mit der Oberfläche in den jeweiligen Führungselementen einzeln derartig verrutschen, das sich die Profilkontur des Reifenbauteils auf die Vorderseiten der parallel zueinander angeordneten Klemmsegmente überträgt und/oder darauf abgebildet wird. Darunter ist zu verstehen, dass die Vorderseiten der Klemmsegmente zusammen gesehen, die Profilkontur so nachbilden, dass die Vorderseiten bei dem nachfolgenden Annähern der fixierten Klemmsegmente an die Oberfläche des aufgelegten Reifenbauteils, die über die gesamte Klemmbreite an der Oberfläche gleichmäßig anliegen und dadurch gleichmäßig an die Oberfläche angedrückt werden.

Alternativ kann aber auch vorgesehen sein, dass das einzelne Bewegen der parallel zueinander angeordneten Klemmsegmente dadurch erfolgt, dass alle Klemmsegmente gemeinsam in einer gelösten Stellung, in der sie geführt von den jeweiligen Führungselementen einzeln und unabhängig von den anderen Klemmsegmenten in oder entgegen der ersten Richtung beweglich sind, gegen eine die Profilkontur des Reifenbauteils wiedergebende Schablone gedrückt werden, wobei die Klemmsegmente bei einer Berührung mit der Schablone in den jeweiligen Führungselementen einzeln derartig verrutschen, das sich die Profilkontur des Reifenbauteils auf die Vorderseiten der parallel zueinander angeordneten Klemmsegmente überträgt und/oder darauf abgebildet wird. So kann das Abbilden bzw. Übertragen der Profilkontur auch anderweitig erfolgen.

Vorzugsweise ist weiterhin vorgesehen, dass das Annähern der fixierten Klemmsegmente an die Schneidleiste, um das auf die Schneidleiste aufgelegte Reifenbauteil zwischen den Vorderseiten und der Schneidleiste einzuklemmen, durch Betätigen eines Aktuators, vorzugsweise lediglich eines Aktuators, erfolgt, wobei der Aktuator die Führungselemente mit den fixierten Klemmsegmenten gemeinsam auf die Schneidleiste zu bewegt. Daher ist über lediglich einen Aktuator eine gemeinsame Annäherung bzw. ein gemeinsames Andrücken möglich, was den Prozess insgesamt vereinfacht und weniger aufwändig macht, bei gleichzeitigem Ermöglichen einer konstanten Klemmung.

Weitere Merkmale und Vorteile der Klemmvorrichtung ergeben sich aus der nachfolgenden Beschreibung eines Ausführungsbeispiels, wobei auf die beigefügte Zeichnung Bezug genommen wird.

In den Zeichnungen zeigen
- Fig. 1: eine Klemmvorrichtung für eine Reifenaufbauanlage;
- Fig. 2: ein Führungselement mit Klemmsegmenten der Klemmvorrichtung gemäß Fig. 1;
- Fig. 3: eine Detailansicht einer Fixieranordnung zum Fixieren der Klemmsegmente; und
- Fig. 4: eine Detailansicht der Klemmvorrichtung gemäß Fig. 1.

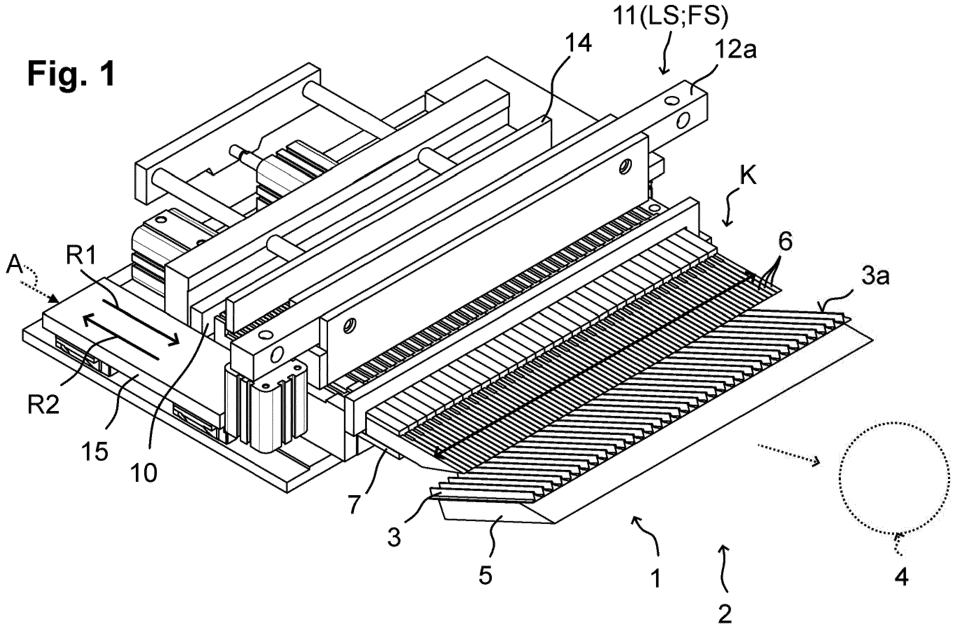

Figur 1 zeigt eine Klemmvorrichtung 1 als Bestandteil einer Reifenaufbauanlage 2, die in Fig. 1 lediglich schematisch und unvollständig dargestellt ist. Die Klemmvorrichtung 1 dient dazu, bereitgestellte Reifenbauteile 3, beispielsweise einen profilierten Laufstreifen, einen profilierten Seitenstreifen, eine unprofilierte Innenschicht, etc. die zum nachfolgenden Aufspulen auf einer Reifenaufbautrommel 4 auf die korrekte Länge zu schneiden sind, für diesen Schnittprozess zu fixieren. Dazu wird das betreffende Reifenbauteil 3 flächig auf eine Schneidleiste 5 gelegt und von oben über ein Klemmelement K, das aus mehreren parallel zueinander angeordneten, beweglichen Klemmsegmenten 6 besteht, auf die Schneidleiste 5 aufgedrückt. Das jeweilige Reifenbauteil 3 wird also zwischen dem segmentierten Klemmelement K und der Schneidleiste 5 über eine definierte Klemmbreite B eingeklemmt.

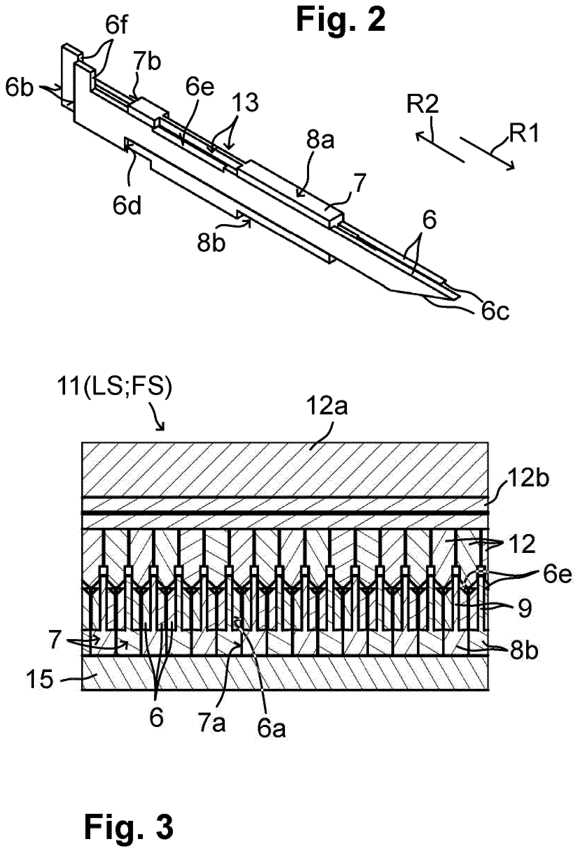

Die einzelnen Klemmsegmente 6 sind dabei paarweise in einem in Fig. 2 dargestellten Führungselement 7 längsverschieblich aufgenommen. Das Führungselement 7 weist obere und untere Führungsleisten 8a, 8b sowie einen Trennsteg 9 (s. Fig. 3) auf, wobei die Klemmsegmente 6 zwischen den Führungsleisten 8a, 8b längsverschieblich geführt werden. Durch den Trennsteg 9 werden die parallel zueinander liegenden Klemmsegmente 6 voneinander getrennt, so dass sich die Klemmsegmente 6 innerhalb eines Führungselementes 7 bei einer Längsverschiebung nicht gegenseitig in ihrer Bewegung beeinflussen.

Wie aus Fig. 3 ersichtlich, liegen in dem Klemmelement K mehrere Führungselemente 7 mit ihren äußeren Oberflächen 7a aneinander an, so dass sich eine parallele Anordnung von einer Vielzahl an Klemmsegmenten 6 über die Klemmbreite B (s. Fig. 1) ergibt. Damit sich die Klemmsegmente 6 benachbarter Führungselemente 7 nicht in ihrer Bewegung beeinflussen, schließt eine äußere Oberfläche 6a der Klemmsegmente 6 nicht mit der äußeren Oberfläche 7a des jeweiligen Führungselementes 7 ab und ragt auch nicht darüber hinaus. Vielmehr sind die Klemmsegmente 6 gegenüber der äußeren Oberfläche 7a des jeweiligen Führungselementes 7 nach innen eingerückt.

Für eine gleichmäßige Klemmung des Reifenbauteils 3 mit einem derartigen segmentierten Klemmelement K können die einzelnen Klemmsegmente 6 geführt von den Führungsleisten 8a, 8b der einzelnen benachbarten Führungselemente 7 zunächst über ein Andrückelement 10 längs in eine erste Richtung R1 auf das Reifenbauteil 3 zu in eine Vorposition bewegt werden. Dazu übt das Andrückelement 10 eine definierte Kraft auf eine Rückseite 6b bzw. hintere Stirnseite aller Klemmsegmente 6 gleichzeitig aus, wobei die Führungselemente 7 dabei vorzugsweise starr bleiben. Das Andrückelement 10 sorgt dadurch für eine Annäherung der einzelnen Klemmsegmente 6 an das Reifenbauteil 3, ohne dass eine Vorderseite 6c bzw. vordere Stirnseite der einzelnen Klemmsegmente 6 das Reifenbauteil 3 berühren. Das Erreichen der Vorposition kann beispielsweise dadurch angezeigt werden, dass ein erster Vorsprung 6d an den einzelnen Klemmsegmenten 6 an einer Stirnseite 7b des jeweils zugeordneten Führungselementes 7 zum Anliegen kommt. Nach Erreichen der Vorposition kann das Andrückelement 10 in seine Ausgangsposition zurückgefahren werden.

Anschließend werden die einzelnen Führungselemente 7 in die erste Richtung R1 auf das Reifenbauteil 3 zu bewegt, so dass die Klemmsegmente 6 mit ihrer Vorderseite 6c ab einer bestimmten Position eine Oberfläche 3a des Reifenbauteils 3 berühren und dadurch nicht mehr weiter in die erste Richtung R1 bewegt werden können. Je nach Profilierung des Reifenbauteils 3 treffen die Klemmsegmente 6 zu unterschiedlichen Zeitpunkten auf der Oberfläche 3a des Reifenbauteils 3 auf, so dass einzelne Klemmsegmente 6, die das Reifenbauteil 3 bereits berührt haben, geführt von den Führungsleisten 8a, 8b längs in den Führungselementen 7 verrutschen.

Die Führungselemente 7 sind dazu beispielsweise gemeinsam auf einem Wagen 15 angeordnet bzw. befestigt, der parallel zur ersten Richtung R1 verschoben bzw. verfahren werden kann. Auf den Wagen 15 kann dazu in beliebiger Weise, beispielsweise über einen Aktuator A, der in Fig. 1 lediglich schematisch durch einen gestrichelten Pfeil angedeutet ist, eine in die erste Richtung R1 gerichteten Kraft ausgeübt werden, so dass der Wagen 15 mit den Führungselementen 7 an das Reifenbauteil 3 wie beschrieben angenähert werden kann.

Der Annäherungsprozess der Führungselemente 7 an das Reifenbauteil 3 erfolgt so lange, bis alle Klemmsegmente 6 das Reifenbauteil 3 berühren und sich demnach die Profilkontur der Oberfläche 3a des Reifenbauteils 3 auf die Vorderseiten 6c der Klemmsegmente 6 vollständig übertragen hat bzw. die Vorderseiten 6c zusammen die Profilkontur abbilden. In dem Fall wird eine weitere Bewegung der Führungselemente 7 zunächst gestoppt. Auf diese Weise können sowohl stark profilierte als auch unprofilierte Oberflächen 3a abgebildet werden.

Statt dem beschriebenen Abbilden bzw. Übertragen der Profilkontur durch eine Bewegung der Führungselemente 7 über den Wagen 15 kann auch eine die Profilkontur wiedergebende Schablone vorgesehen sein, die gegen die nicht-fixierten Vorderseiten 6c der Klemmsegmente 6 gedrückt wird. Auch dadurch werden die einzelnen Klemmsegmente 6 der Schablonenkontur entsprechend in den Führungselementen 7 verrutschen.

Anschließend werden die Klemmsegmente 6 in beiden beschriebenen Varianten in ihrem jeweiligen Führungselement 7 fixiert, wobei dazu gemäß Fig. 3 eine Fixieranordnung 11 mit mehreren Keilen 12 vorgesehen ist, mithilfe derer die einzelnen Klemmsegmente 6 von einer gelösten Stellung LS in eine fixierte Stellung FS gebracht werden können. Die Keile 12 können dazu bei Betätigung einer entsprechenden Betätigungsvorrichtung, beispielsweise eines Motors, insbesondere eines Servomotors, im Bereich einer Aussparung 13 in der oberen Führungsleisten 8a auf eine Oberseite 6e der einzelnen Klemmsegmente 6 aufgedrückt werden. Dazu wird über einen Steg 12a eine definierte Kraft auf alle Keile 12 gemeinsam ausgeübt, so dass das jeweilige Klemmsegment 6 zwischen der unteren Führungsleiste 8b und dem Keil 12 eingeklemmt und dadurch eine Längsverschieblichkeit innerhalb des Führungselementes 7 verhindert wird. Die vorab übertragene bzw. abgebildete Profilkontur wird dadurch fixiert. Alternativ zu einem oberseitigen Aufdrücken der Keile 12 auf die Klemmsegmente 6 kann bei entsprechender Konstruktion auch ein Aufdrücken von einer der anderen Seiten vorgesehen sein.

Um die Klemmwirkung zu optimieren, ist die Oberseite 6e der Klemmsegmente 6 zur äußeren Oberfläche 6a hin abgeschrägt und der Keil 12 entsprechend komplementär abgeschrägt. Bei einer Krafteinwirkung von oben über den Keil 12 wird das Klemmsegment 6 dabei nicht nur gegen die untere Führungsleiste 8b gedrückt, sondern gleichzeitig auch in Richtung des Trennstegs 9. Dadurch wird zum Ausbilden einer ausreichenden Klemmung ein Kraftschluss/Reibschluss über eine ausreichend große Fläche erreicht und gleichzeitig auch die Beabstandung benachbarter Klemmsegmente 6 sichergestellt.

Ergänzend ist zwischen den Keilen 12 und dem Steg 12a ein Zwischenstück 12b aus einem flexiblen Material, beispielsweise Hartgummi, angeordnet, über das die Andrückkraft vom Steg 12a auf die Keile 12 übertragen wird. Durch das elastische Zwischenstück 12b können Toleranzen in der Höhe der Klemmsegmente 6 ausgeglichen werden, so dass jeder Keil 12 in etwa mit derselben Kraft auf die Oberseite 6e der einzelnen Klemmsegmente 6 aufgedrückt wird. Alternativ können die Keile 12 selbst auch elastisch ausgeführt sein, so dass auch ohne ein elastisches Zwischenstück 12b ein Toleranzausgleich stattfinden kann.

In dieser fixierten Stellung FS der Klemmsegmente 6 werden die Führungselemente 7 anschließend durch den Aktuator A weiter in die erste Richtung R1 bewegt, so dass die entsprechend der Profilkontur ausgerichteten und über die Fixieranordnung 11 fixierten Vorderseiten 6c der Klemmsegmente 6 gleichmäßig auf die Oberfläche 3a des jeweiligen Reifenbauteils 3 gedrückt werden. Dadurch kann das Reifenbauteil 3 im Schnittbereich über die gesamte Schnittbreite B gleichmäßig auf die Schneidleiste 5 aufgedrückt werden, ohne dass sich benachbarte Klemmsegmente 6 gegenseitig beeinflussen. Die Betätigung des Aktuators A zum Annähern der Führungselemente 7 an das Reifenbauteil 3 kann dabei beispielsweise bis zu einer definierten Andruckkraft erfolgen, so dass das Reifenbauteil 3 sicher eingeklemmt wird für den nachfolgenden Schnittvorgang.

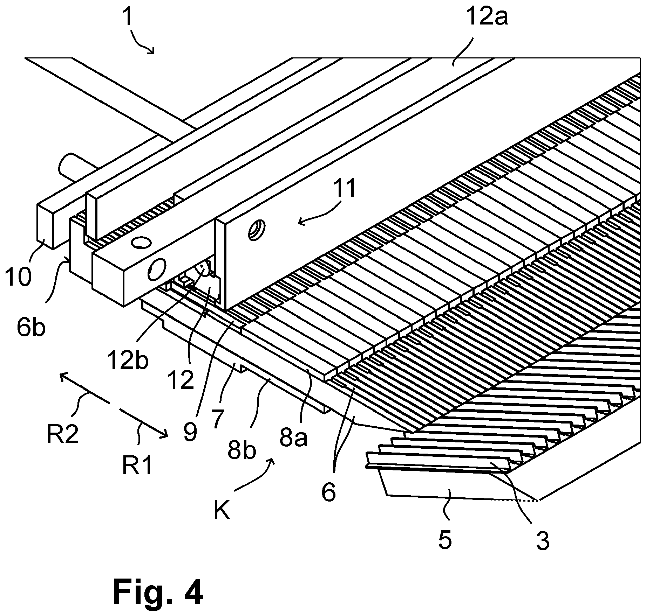

Nachdem das Reifenbauteil 3 geschnitten wurde, werden die Führungselemente 7 beispielsweise durch den Aktuator A in eine der ersten Richtung R1 entgegengesetzte zweite Richtung R2 zurück in die Ausgangsposition gefahren und das geschnittene Reifenbauteil 3 zur nächsten Station im Reifenaufbauprozess gefördert, beispielsweise auf die Reifenaufbautrommel 4. Davor, gleichzeitig oder danach können die einzelnen Klemmsegmente 6 durch Freigabe der Keile 12 wieder gelöst bzw. in die gelöste Stellung LS gebracht werden und anschließend über ein Rückstellelement 14 in die in Fig. 4 dargestellte Ausgangsposition gebracht werden, um den nächsten Schnittvorgang wie beschrieben auszuführen. Das Rückstellelement 14 zieht dabei die Klemmsegmente 6 in den Führungselementen 7 in die zweite Richtung R2, wobei das Rückstellelement 14 dazu beispielsweise an einem zweiten Vorsprung 6f an den Klemmsegmenten 6 angreift.

### Bezugszeichenliste

- 1: Klemmvorrichtung
- 2: Reifenaufbauanlage
- 3: Reifenbauteil
- 3a: Oberfläche des Reifenbauteils 3
- 4: Reifenaufbautrommel
- 5: Schneidleiste
- 6: Klemmsegment
- 6a: äußere Oberfläche des Klemmsegments 6
- 6b: Rückseite des Klemmsegments 6
- 6c: Vorderseite des Klemmsegments 6
- 6d: erster Vorsprung an dem Klemmsegment 6
- 6e: Oberseite des Klemmsegments 6
- 6f: zweiter Vorsprung an dem Klemmsegment 6
- 7: Führungselement
- 7a: äußere Oberflächen des Führungselementes 7
- 7b: Stirnseite des Führungselementes 7
- 8a: obere Führungsleiste
- 8b: untere Führungsleiste
- 9: Trennsteg
- 10: Andrückelement
- 11: Fixieranordnung
- 12: Keile
- 12a: Steg
- 12b: Zwischenstück
- 13: Aussparung in der oberen Führungsleiste 8a
- 14: Rückstellelement
- 15: Wagen
- A: Aktuator
- B: Klemmbreite
- FS: fixierte Stellung
- K: Klemmelement
- LS: gelöste Stellung
- R1: erste Richtung
- R2: zweite Richtung

## Patentansprüche

1. Klemmvorrichtung (1) für eine Reifenaufbauanlage (2) zur Herstellung eines Fahrzeugreifens bestehend aus mehreren Reifenbauteilen (3), mindestens aufweisend:
- eine Schneidleiste (5) zum Auflegen eines Reifenbauteils (3);
- ein Klemmelement (K), wobei das Klemmelement (K) durch einen Aktuator (A) in eine erste Richtung (R1) auf die Schneidleiste (5) zu bewegt werden kann zum Einklemmen eines auf die Schneidleiste (5) aufgelegten Reifenbauteils (3) zwischen dem Klemmelement (K) und der Schneidleiste (5);
**dadurch gekennzeichnet, dass**
das Klemmelement (K) mehrere parallel zueinander angeordnete Klemmsegmente (6) aufweist, die in benachbart zueinander angeordneten Führungselementen (7) aufgenommen sind, wobei die Klemmsegmente (6)
- in einer gelösten Stellung (LS) geführt von den jeweiligen Führungselementen (7) einzeln in oder entgegen der ersten Richtung (R1) beweglich sind, und
- in einer fixierten Stellung (FS) derartig in den Führungselementen (7) fixiert werden können, dass sie bei einer Verstellung des jeweiligen Führungselementes (7) in die erste Richtung (R1) mit einer Vorderseite (6c) auf die Schneidleiste (5) zu bewegt werden zum Einklemmen eines auf die Schneidleiste (5) aufgelegten Reifenbauteils (3) zwischen der Vorderseite (6c) und der Schneidleiste (5).

2. Klemmvorrichtung (1) nach Anspruch 1,
**dadurch gekennzeichnet, dass**
die Führungselemente (7) jeweils eine obere und eine untere Führungsleiste (8a, 8b) aufweisen, wobei die Klemmsegmente (6) zwischen den Führungsleisten (8a, 8b) längsverschieblich geführt sind.

3. Klemmvorrichtung (1) nach Anspruch 2,
**dadurch gekennzeichnet, dass**
zwischen der oberen und der unteren Führungsleiste (8a, 8b) mindestens ein Trennsteg (9) verläuft, wobei in einem Führungselement (7) mindestens zwei Klemmsegmente (6) aufgenommen sind und die mindestens zwei Klemmsegmente (6) durch den mindestens einen Trennsteg (9) voneinander separiert sind.

4. Klemmvorrichtung (1) nach einem der vorhergehenden Ansprüche,
**dadurch gekennzeichnet, dass**
der Aktuator (A) in der fixierten Stellung (FS) der Klemmsegmente (6) derartig auf alle Klemmsegmente (6) des Klemmelementes (K) gemeinsam einwirkt, dass diese gemeinsam in die erste Richtung (R1) bewegt werden, wobei der Aktuator (A) dazu vorzugsweise ausgebildet ist, alle Führungselemente (7) gemeinsam mit den darin fixierten Klemmsegmenten (6) in die erste Richtung (R1) zu verstellen.

5. Klemmvorrichtung (1) nach einem der vorhergehenden Ansprüche,
**dadurch gekennzeichnet, dass**
ferner eine Fixieranordnung (11) mit mehreren beweglichen Keilen (12) vorgesehen ist, wobei die Keile (12) derartig auf die jeweiligen Klemmsegmente (6) aufgedrückt werden können, dass das jeweilige Klemmsegment (6) zwischen dem Keil (12) und dem Führungselement (7), in dem das betreffende Klemmsegment (6) geführt ist, fixiert werden kann zum Einstellen der fixierten Stellung (FS).

6. Klemmvorrichtung (1) nach Anspruch 5,
**dadurch gekennzeichnet, dass**
ein Keil (12) auf mindestens zwei Klemmsegmente (6) desselben und/oder benachbarter Führungselemente (7) einwirken kann zum Fixieren der jeweiligen Klemmsegmente (6).

7. Klemmvorrichtung (1) nach Anspruch 5 oder 6,
**dadurch gekennzeichnet, dass**
die beweglichen Keile (12) oberhalb einer Oberseite (6e) der einzelnen Klemmsegmente (6) angeordnet sind, wobei die Keile (12) derartig auf die Oberseite (6e) der jeweiligen Klemmsegmente (6) aufgedrückt werden können, dass das jeweilige Klemmsegment (6) zwischen dem Keil (12) und dem Führungselement (7), in dem das betreffende Klemmsegment (6) geführt ist, fixiert wird zum Einstellen der fixierten Stellung (FS).

8. Klemmvorrichtung (1) nach Anspruch 7,
**dadurch gekennzeichnet, dass**
die Oberseiten (6e) der Klemmsegmente (6) nach außen hin abgeschrägt sind und die Keile (12) entsprechend komplementär abgeschrägt sind.

9. Klemmvorrichtung (1) nach einem der Ansprüche 5 bis 8,
**dadurch gekennzeichnet, dass**
zwischen den Keilen (12) und einem die Keile (12) auf die Klemmsegmente (6) aufdrückenden Steg (12a) ein elastisches Zwischenstück (12b) angeordnet ist und/oder die Keile (12) aus einem elastischen Material gefertigt sind zum Ausgleichen von Toleranzen.

10. Klemmvorrichtung (1) nach einem der vorhergehenden Ansprüche,
**dadurch gekennzeichnet, dass**
eine äußere Oberfläche (6a) der Klemmsegmente (6) nicht mit einer äußeren Oberfläche (7a) des jeweiligen Führungselementes (7) abschließt oder darüber hinausragt und/oder die Klemmsegmente (6) gegenüber der äußeren Oberfläche (7a) des jeweiligen Führungselementes (7), in dem sie aufgenommen sind, nach innen eingerückt sind,
wobei benachbarte Führungselemente (7) des Klemmelementes (K) mit ihren äußeren Oberflächen (7a) aneinanderliegen.

11. Klemmvorrichtung (1) nach einem der vorhergehenden Ansprüche,
**dadurch gekennzeichnet, dass**
die Klemmsegmente (6) einen ersten Vorsprung (6d) aufweisen, der in einer Vorposition an einer Stirnseite (7b) des jeweiligen Führungselementes (7) derartig anliegt, dass eine weitere Verschiebung der Klemmsegmente (6) in die erste Richtung (R1) innerhalb des Führungselementes (7) verhindert ist und/oder die Klemmsegmente (6) einen zweiten Vorsprung (6f) aufweisen, auf den in der gelösten Stellung (LS) ein Rückstellelement (14) derartig einwirken kann, dass sich die Klemmsegmente (6) entgegen der ersten Richtung (R1) innerhalb der Führungselement (7) verschieben.

12. Verfahren zum Einklemmen eines Reifenbauteils (3) zwischen einem Klemmelement (K) und einer Schneidleiste (5), mit einer Klemmvorrichtung (1) nach einem der vorhergehenden Ansprüche, mit mindestens den folgenden Schritten:
- Auflegen des Reifenbauteils (3) auf die Schneidleiste (5);
- einzelnes Bewegen von parallel zueinander angeordneten Klemmsegmenten (6), die in Führungselementen (7) geführt sind, derartig, dass sich eine Profilkontur einer Oberfläche (3a) des aufgelegten Reifenbauteils (3) auf Vorderseiten (6c) der parallel zueinander angeordneten Klemmsegmente (6) überträgt und/oder darauf abgebildet wird;
- anschließendes Fixieren der Klemmsegmente (6) in den Führungselementen (7);
- gemeinsames Annähern der fixierten Klemmsegmente (6) an die Schneidleiste (5) um das auf die Schneidleiste (5) aufgelegte Reifenbauteil (3) zwischen den Vorderseiten (6c) der Klemmsegmente (6) und der Schneidleiste (5) einzuklemmen.

13. Verfahren nach Anspruch 12,
**dadurch gekennzeichnet, dass**
das einzelne Bewegen der parallel zueinander angeordneten Klemmsegmente (7) dadurch erfolgt, dass alle Klemmsegmente (6) gemeinsam in einer gelösten Stellung (FS), in der sie geführt von den jeweiligen Führungselementen (7) einzeln in oder entgegen der ersten Richtung (R1) beweglich sind, mit der Oberfläche (3a) des auf die Schneidleiste (5) aufgelegten Reifenbauteils (3) in Berührung gebracht werden, wobei die Klemmsegmente (6) bei einer Berührung mit der Oberfläche (3a) in den jeweiligen Führungselementen (7) einzeln derartig verrutschen, das sich die Profilkontur des Reifenbauteils (3) auf die Vorderseiten (6c) der parallel zueinander angeordneten Klemmsegmente (6) überträgt und/oder darauf abgebildet wird.

14. Verfahren nach Anspruch 12,
**dadurch gekennzeichnet, dass**
das einzelne Bewegen der parallel zueinander angeordneten Klemmsegmente (7) dadurch erfolgt, dass alle Klemmsegmente (6) gemeinsam in einer gelösten Stellung (FS), in der sie geführt von den jeweiligen Führungselementen (7) einzeln in oder entgegen der ersten Richtung (R1) beweglich sind, gegen eine die Profilkontur des Reifenbauteils (3) wiedergebende Schablone gedrückt werden, wobei die Klemmsegmente (6) bei einer Berührung mit der Schablone in den jeweiligen Führungselementen (7) einzeln derartig verrutschen, das sich die Profilkontur des Reifenbauteils (3) auf die Vorderseiten (6c) der parallel zueinander angeordneten Klemmsegmente (6) überträgt und/oder darauf abgebildet wird.

15. Verfahren nach einem der Ansprüche 12 bis 14,
**dadurch gekennzeichnet, dass**
das Annähern der fixierten Klemmsegmente (6) an die Schneidleiste (5), um das auf die Schneidleiste (5) aufgelegte Reifenbauteil (3) zwischen den Vorderseiten (6c) und der Schneidleiste (5) einzuklemmen, durch Betätigen eines Aktuators (A) erfolgt, wobei der Aktuator (A) die Führungselemente (7) mit den fixierten Klemmsegmenten (6) gemeinsam auf die Schneidleiste (5) zu bewegt.

## Claims

1. Clamping device (1) for a tyre building installation (2) for producing a vehicle tyre consisting of a plurality of tyre components (3), at least having:
- a cutting bar (5) on which a tyre component (3) is placed;
- a clamping element (K), wherein the clamping element (K) can be moved by an actuator (A) in a first direction (R1) towards the cutting bar (5) in order to clamp a tyre component (3) placed on the cutting bar (5) between the clamping element (K) and the cutting bar (5);
**characterized in that**
the clamping element (K) has a plurality of clamping segments (6), which are arranged in parallel with one another and are received in guiding elements (7), which are arranged adjacent to one another, wherein the clamping segments (6)
- in a released position (LS), are able to move individually, guided by the respective guiding elements (7), in or counter to the first direction (R1), and
- in a fixed position (FS), can be fixed in the guiding elements (7) in such a manner that, when the respective guiding element (7) is shifted in the first direction (R1), a front side (6c) of said clamping segments is moved towards the cutting bar (5) in order to clamp a tyre component (3) placed on the cutting bar (5) between the front side (6c) and the cutting bar (5).

2. Clamping device (1) according to Claim 1,
**characterized in that**
the guiding elements (7) each have an upper and a lower guiding bar (8a, 8b), wherein the clamping segments (6) are guided so as to be longitudinally displaceable between the guiding bars (8a, 8b).

3. Clamping device (1) according to Claim 2,
**characterized in that**
at least one separating web (9) runs between the upper and the lower guiding bar (8a, 8b), wherein at least two clamping segments (6) are received in one guiding element (7) and the at least two clamping segments (6) are separated from one another by the at least one separating web (9).

4. Clamping device (1) according to one of the preceding claims,
**characterized in that**
when the clamping segments (6) are in the fixed position (FS), the actuator (A) acts on all of the clamping segments (6) of the clamping element (K) together in such a manner that said clamping segments are moved together in the first direction (R1), wherein the actuator (A) is preferably designed to shift all of the guiding elements (7), together with the clamping segments (6) fixed therein, in the first direction (R1).

5. Clamping device (1) according to one of the preceding claims,
**characterized in that**
provision is also made for a fixing arrangement (11) with a plurality of movable wedges (12), wherein the wedges (12) can be pressed onto the respective clamping segments (6) in such a manner that the respective clamping segment (6) can be fixed between the wedge (12) and the guiding element (7) in which the clamping segment (6) in question is guided, in order to set the fixed position (FS).

6. Clamping device (1) according to Claim 5,
**characterized in that**
in order to fix the respective clamping segments (6), one wedge (12) can act on at least two clamping segments (6) of the same and/or of adjacent guiding element(s) (7).

7. Clamping device (1) according to Claim 5 or 6,
**characterized in that**
the movable wedges (12) are arranged above a top side (6e) of the individual clamping segments (6), wherein the wedges (12) can be pressed onto the top side (6e) of the respective clamping segments (6) in such a manner that the respective clamping segment (6) is fixed between the wedge (12) and the guiding element (7) in which the clamping segment (6) in question is guided, in order to set the fixed position (FS).

8. Clamping device (1) according to Claim 7,
**characterized in that**
the top sides (6e) of the clamping segments (6) are outwardly bevelled and the wedges (12) are accordingly bevelled in a complementary manner.

9. Clamping device (1) according to one of Claims 5 to 8,
**characterized in that**
in order to compensate for tolerances, an elastic intermediate piece (12b) is arranged between the wedges (12) and a web (12a) that presses the wedges (12) onto the clamping segments (6) and/or the wedges (12) are manufactured from an elastic material.

10. Clamping device (1) according to one of the preceding claims,
**characterized in that**
an outer surface (6a) of the clamping segments (6) is not flush with, or does not protrude beyond, an outer surface (7a) of the respective guiding element (7) and/or the clamping segments (6) are inwardly recessed with respect to the outer surface (7a) of the respective guiding element (7) in which they are received, wherein adjacent guiding elements (7) of the clamping element (K) lie on top of one another by way of their outer surfaces (7a).

11. Clamping device (1) according to one of the preceding claims,
**characterized in that**
the clamping segments (6) have a first protrusion (6d), which, in a preliminary position, bears against an end side (7b) of the respective guiding element (7) in such a manner that a further displacement of the clamping segments (6) in the first direction (R1) within the guiding element (7) is prevented and/or the clamping segments (6) have a second protrusion (6f), on which, in the released position (LS), a restoring element (14) can act in such a manner that the clamping segments (6) are displaced counter to the first direction (R1) within the guiding element (7).

12. Method for clamping a tyre component (3) between a clamping element (K) and a cutting bar (5) by way of a clamping device (1) according to one of the preceding claims, with at least the following steps:
- placing the tyre component (3) onto the cutting bar (5);
- individually moving clamping segments (6), which are arranged in parallel with one another and are guided in guiding elements (7), in such a manner that a profile contour of a surface (3a) of the placed-on tyre component (3) is transferred onto and/or replicated on front sides (6c) of the clamping segments (6) arranged in parallel with one another;
- subsequently fixing the clamping segments (6) in the guiding elements (7);
- moving the fixed clamping segments (6) together towards the cutting bar (5) in order to clamp the tyre component (3) placed on the cutting bar (5) between the front sides (6c) of the clamping segments (6) and the cutting bar (5).

13. Method according to Claim 12,
**characterized in that**
the individual movement of the clamping segments (7) arranged in parallel with one another takes place by virtue of all of the clamping segments (6), in a released position (FS) in which they are able to move individually, guided by the respective guiding elements (7), in or counter to the first direction (R1), together being brought into contact with the surface (3a) of the tyre component (3) placed on the cutting bar (5), wherein the clamping segments (6), upon contact with the surface (3a), individually slide in the respective guiding elements (7) in such a manner that the profile contour of the tyre component (3) is transferred onto and/or replicated on the front sides (6c) of the clamping segments (6) arranged in parallel with one another.

14. Method according to Claim 12,
**characterized in that**
the individual movement of the clamping segments (7) arranged in parallel with one another takes place by virtue of all of the clamping segments (6), in a released position (FS) in which they are able to move individually, guided by the respective guiding elements (7), in or counter to the first direction (R1), together being pressed against a template that reproduces the profile contour of the tyre component (3), wherein the clamping segments (6), upon contact with the template, individually slide in the respective guiding elements (7) in such a manner that the profile contour of the tyre component (3) is transferred onto and/or replicated on the front sides (6c) of the clamping segments (6) arranged in parallel with one another.

15. Method according to one of Claims 12 to 14,
**characterized in that**
the fixed clamping segments (6) are moved closer to the cutting bar (5), in order to clamp the tyre component (3) placed on the cutting bar (5) between the front sides (6c) and the cutting bar (5), by actuating an actuator (A), wherein the actuator (A) moves the guiding elements (7), together with the fixed clamping segments (6), towards the cutting bar (5).

## Revendications

1. Dispositif de serrage (1) pour une installation de confection de pneus (2) pour la fabrication d'un pneu de véhicule constitué de plusieurs composants de pneu (3), présentant au moins :
- une barre de coupe (5) pour poser un composant de pneu (3) ;
- un élément de serrage (K), l'élément de serrage (K) pouvant être déplacé par un actionneur (A) dans une première direction (R1) vers la barre de coupe (5) pour serrer un composant de pneu (3) posé sur la barre de coupe (5) entre l'élément de serrage (K) et la barre de coupe (5) ;
**caractérisé en ce que**
l'élément de serrage (K) présente plusieurs segments de serrage (6) agencés parallèlement les uns aux autres, qui sont reçus dans des éléments de guidage (7) agencés de manière voisine les uns des autres, les segments de serrage (6)
- dans une position relâchée (LS), pouvant être déplacés individuellement dans ou à l'encontre de la première direction (R1), en étant guidés par les éléments de guidage respectifs (7), et
- dans une position fixe (FS), pouvant être fixés dans les éléments de guidage (7) de telle sorte que, lors d'un déplacement de l'élément de guidage respectif (7) dans la première direction (R1), ils sont déplacés avec un côté avant (6c) vers la barre de coupe (5) pour serrer un composant de pneu (3) posé sur la barre de coupe (5) entre le côté avant (6c) et la barre de coupe (5).

2. Dispositif de serrage (1) selon la revendication 1,
**caractérisé en ce que**
les éléments de guidage (7) présentent chacun une barre de guidage supérieure et une barre de guidage inférieure (8a, 8b), les segments de serrage (6) étant guidés de manière à pouvoir coulisser longitudinalement entre les barres de guidage (8a, 8b).

3. Dispositif de serrage (1) selon la revendication 2,
**caractérisé en ce**
**qu'**au moins une entretoise de séparation (9) s'étend entre la barre de guidage supérieure et la barre de guidage inférieure (8a, 8b), au moins deux segments de serrage (6) étant reçus dans un élément de guidage (7) et les au moins deux segments de serrage (6) étant séparés l'un de l'autre par l'au moins une entretoise de séparation (9).

4. Dispositif de serrage (1) selon l'une quelconque des revendications précédentes,
**caractérisé en ce que**
l'actionneur (A), dans la position fixée (FS) des segments de serrage (6), agit conjointement sur tous les segments de serrage (6) de l'élément de serrage (K) de telle sorte que ceux-ci sont déplacés conjointement dans la première direction (R1), l'actionneur (A) étant de préférence configuré pour déplacer tous les éléments de guidage (7) conjointement avec les segments de serrage (6) qui y sont fixés dans la première direction (R1).

5. Dispositif de serrage (1) selon l'une quelconque des revendications précédentes,
**caractérisé en ce**
**qu'**il est en outre prévu un agencement de fixation (11) avec plusieurs cales mobiles (12), les cales (12) pouvant être pressées sur les segments de serrage respectifs (6) de telle sorte que le segment de serrage respectif (6) peut être fixé entre la cale (12) et l'élément de guidage (7) dans lequel le segment de serrage concerné (6) est guidé, pour ajuster la position fixée (FS).

6. Dispositif de serrage (1) selon la revendication 5,
**caractérisé en ce**
**qu'**une cale (12) peut agir sur au moins deux segments de serrage (6) du même élément de guidage et/ou d'éléments de guidage voisins (7) pour fixer les segments de serrage respectifs (6).

7. Dispositif de serrage (1) selon la revendication 5 ou 6,
**caractérisé en ce que**
les cales mobiles (12) sont agencées au-dessus d'un côté supérieur (6e) des segments de serrage individuels (6), les cales (12) pouvant être pressées sur le côté supérieur (6e) des segments de serrage respectifs (6) de telle sorte que le segment de serrage respectif (6) est fixé entre la cale (12) et l'élément de guidage (7) dans lequel le segment de serrage concerné (6) est guidé, pour ajuster la position fixée (FS).

8. Dispositif de serrage (1) selon la revendication 7,
**caractérisé en ce que**
les côtés supérieurs (6e) des segments de serrage (6) sont biseautés vers l'extérieur et les cales (12) sont biseautées de manière complémentaire correspondante.

9. Dispositif de serrage (1) selon l'une quelconque des revendications 5 à 8,
**caractérisé en ce**
**qu'**une pièce intermédiaire élastique (12b) est agencée entre les cales (12) et une entretoise (12a) pressant les cales (12) sur les segments de serrage (6) et/ou les cales (12) sont fabriquées en un matériau élastique pour compenser les tolérances.

10. Dispositif de serrage (1) selon l'une quelconque des revendications précédentes,
**caractérisé en ce**
**qu'**une surface extérieure (6a) des segments de serrage (6) ne se termine pas avec une surface extérieure (7a) de l'élément de guidage respectif (7) ou dépasse de celle-ci et/ou les segments de serrage (6) sont en retrait vers l'intérieur par rapport à la surface extérieure (7a) de l'élément de guidage respectif (7) dans lequel ils sont reçus,
des éléments de guidage (7) voisins de l'élément de serrage (K) étant en application l'un contre l'autre par leurs surfaces extérieures (7a).

11. Dispositif de serrage (1) selon l'une quelconque des revendications précédentes,
**caractérisé en ce que**
les segments de serrage (6) présentent une première saillie (6d) qui, dans une position préalable, s'applique contre un côté frontal (7b) de l'élément de guidage respectif (7) de telle sorte qu'un coulissement supplémentaire des segments de serrage (6) dans la première direction (R1) à l'intérieur de l'élément de guidage (7) est empêché et/ou les segments de serrage (6) présentent une deuxième saillie (6f), sur laquelle un élément de rappel (14) peut agir dans la position relâchée (LS) de telle sorte que les segments de serrage (6) coulissent à l'encontre de la première direction (R1) à l'intérieur de l'élément de guidage (7).

12. Procédé de serrage d'un composant de pneu (3) entre un élément de serrage (K) et une barre de coupe (5), avec un dispositif de serrage (1) selon l'une quelconque des revendications précédentes, avec au moins les étapes suivantes :
- la pose du composant de pneu (3) sur la barre de coupe (5) ;
- le déplacement individuel de segments de serrage (6) agencés parallèlement les uns aux autres, qui sont guidés dans des éléments de guidage (7), de telle sorte qu'un contour de profil d'une surface (3a) du composant de pneu (3) posé se transfère sur des côtés avant (6c) des segments de serrage (6) agencés parallèlement les uns aux autres et/ou est reproduit sur ceux-ci ;
- ensuite la fixation des segments de serrage (6) dans les éléments de guidage (7) ;
- le rapprochement conjoint des segments de serrage (6) fixés vers la barre de coupe (5) afin de serrer le composant de pneu (3) posé sur la barre de coupe (5) entre les côtés avant (6c) des segments de serrage (6) et la barre de coupe (5).

13. Procédé selon la revendication 12,
**caractérisé en ce que**
le déplacement individuel des segments de serrage (7) agencés parallèlement les uns aux autres s'effectue par le fait que tous les segments de serrage (6) sont amenés conjointement en contact avec la surface (3a) du composant de pneu (3) posé sur la barre de coupe (5) dans une position relâchée (FS) dans laquelle ils peuvent être déplacés individuellement dans ou à l'encontre de la première direction (R1), en étant guidés par les éléments de guidage respectifs (7), les segments de serrage (6), lors d'un contact avec la surface (3a), glissant individuellement dans les éléments de guidage respectifs (7) de telle sorte que le contour de profil du composant de pneu (3) se transfère sur les côtés avant (6c) des segments de serrage (6) agencés parallèlement les uns aux autres et/ou est reproduit sur ceux-ci.

14. Procédé selon la revendication 12,
**caractérisé en ce que**
le déplacement individuel des segments de serrage (7) agencés parallèlement les uns aux autres s'effectue par le fait que tous les segments de serrage (6) sont pressés conjointement contre un gabarit représentant le contour de profil du composant de pneu (3) dans une position relâchée (FS) dans laquelle ils peuvent être déplacés individuellement dans ou à l'encontre de la première direction (R1), en étant guidés par les éléments de guidage respectifs (7), les segments de serrage (6), lors d'un contact avec le gabarit, glissant individuellement dans les éléments de guidage respectifs (7) de telle sorte que le contour de profil du composant de pneu (3) se transfère sur les côtés avant (6c) des segments de serrage (6) agencés parallèlement les uns aux autres ou est reproduit sur ceux-ci.

15. Procédé selon l'une quelconque des revendications 12 à 14,
**caractérisé en ce que**
le rapprochement des segments de serrage (6) fixés vers la barre de coupe (5), afin de serrer le composant de pneu (3) posé sur la barre de coupe (5) entre les côtés avant (6c) et la barre de coupe (5), s'effectue par actionnement d'un actionneur (A), l'actionneur (A) déplaçant les éléments de guidage (7) avec les segments de serrage (6) fixés conjointement vers la barre de coupe (5).
